# EUROPEAN PATENT SPECIFICATION

(11) **EP 2 180 483 B1**
(45) Date of publication and mention of the grant of the patent: **04.06.2014**
(21) Application number: 08827827.0
(22) Date of filing: 21.08.2008
(51) Int. Cl.: G21D 1/00, G21C 19/02, G21C 19/307, G21D 3/08, G21F 9/00, G21F 9/28, G21C 17/022, G21C 7/10, G21C 13/08, G21C 15/16

(54) **METHOD OF INHIBITING ADHESION OF RADIOACTIVE SUBSTANCE**
VERFAHREN ZUR HEMMUNG DER ADHÄSION EINER RADIOAKTIVEN SUBSTANZ
PROCÉDÉ D'INHIBITION DE L'ADHÉSION D'UNE SUBSTANCE RADIOACTIVE

(30) Priority: 23.08.2007 JP 2007217541
(43) Date of publication of application: 28.04.2010
(73) Proprietor: Kabushiki Kaisha Toshiba, Minato-ku Tokyo 105-8001 (JP)
(72) Inventor: YAMAMOTO, Seiji, Tokyo 105-8001 (JP); ENDA, Masami, Tokyo 105-8001 (JP); AOI, Hiromi, Tokyo 105-8001 (JP); URUMA, Yutaka, Tokyo 105-8001 (JP)
(74) Representative: Kramer - Barske - Schmidtchen
(86) International application number: PCT/JP2008/064940
(87) International publication number: WO 2009/025330

(56) References cited:
- EP-A1- 0 826 789
- JP-A- 2001 124 891
- JP-A- 2002 131 473
- JP-A- 2002 131 473
- JP-A- 2002 207 094
- JP-A- 2003 139 891
- JP-A- 2003 139 891
- JP-A- 2005 003 565
- JP-A- 2005 049 099
- US-A- 5 608 766
- US-A1- 2006 146 975
- US-B1- 6 487 265

## Description

### [TECHNICAL FIELD]

The present invention relates to a method for suppressing the adhesion of radioactive substance onto the surface of metallic materials in structural members ofa nuclear plant.

### [BACKGROUND ART]

In the light water reactor (LWR) using water as a coolant, the measure for reduction of radioactive exposure dosage to workers during periodical inspection works, a preventive maintenance construction, etc., is important. As one of such measure, a chemical decontamination is frequently applied to structural members of the nuclear reactor (such as a reactor pressure vessel, an intra-furnace structure) and piping. In the chemical decontamination, oxide films formed in the surface of metallic materials in structural members of the nuclear reactor and piping are removed by combining reduction and oxidation processes, etc., using chemicals, thereby removing radioactive substances, such as cobalt 60 and cobalt 58 existing in the clad or oxide film on the surface of a metallic material.

However, if a nuclear reactor is re-started after the decontamination, radioactive substances again adhere to the surface of the metallic material forming the nuclear reactor structural members or piping. The adhesion of radioactive substance takes place together with generation of oxide films. In the refreshed metal surface after decontamination, the growth rate of an oxide film is fast, so that the incorporation of radioactive substance occurs particularly quickly. As a result, the dose rate from the surface of the metallic material is increased again in a short cycle after the decontamination.

In order to solve this problem, it has been proposed to alternately repeat the injection of an oxidizing agent and a reducing agent to the instrument and piping of a nuclear power generation plant so as to form an oxide film on the metal material surface of the above-mentioned instrument or piping after decontamination, thereby suppressing adhesion of a radioactive substance (Patent document 1).

It is further known to have hot oxygen or ozone contact the piping of a residual heat removal system after decontamination to form an oxide film on the piping surface, thereby suppressing adhesion of a radioactive substance (Patent document 2).

It is also known to have a chemical containing iron ion contact the surface of metal members constituting a nuclear plant to form a ferrite film on the surface, thereby suppressing adhesion of a radioactive substance (Patent document 3).

Moreover, it is known to form an oxide film containing an oxide having a property of a P-type semiconductor on the surface of structural members of nuclear reactor in a nuclear power generation plant, and then depositing a catalytic substance having a property of an N-type semiconductor on the oxide film, thereby suppressing the development of stress corrosion cracking (Patent document 4).
[Patent document 1] JP-A 2004-294393
[Patent document 2] JP-A 2002-236191
[Patent document 3] JP-A 2006-38483
[Patent document 4] JP-A 2006-162522

EP 0 826 789 A1 discloses a method for treating a metal component to mitigate cracking in a surface of said metal component during use in a water-cooled nuclear reactor or associated equipment, comprising the steps of forming an oxide film on said surface of said metal component, and doping said oxide film with species of a non-noble metal, whereby said species are incorporated in said oxide film to reduce the electrochemical corrosion potential at said surface and thereby mitigating cracking.

US 5,608,766 discloses a method for inhibiting corrosion of an alloy component in a water-cooled nuclear reactor or associated equipment thereof, comprising the steps of removing at least a portion of an oxide film pre-existing on a surface of said alloy component, and injecting a solution or suspension of a compound containing a metal into the water of said reactor to cause at least some of said injected metal to be incorporated in a new oxide film as said new oxide film forms where said pre-existing oxide film was removed, wherein said metal is selected from the group consisting of noble metals and corrosion-inhibiting metals.

JP 2002-131473 A relates to a water-quality control method, which restrains a radioactive substance from being stuck to a reactor core internal structure and to the surface of a pipe.

US 6,487,265 B1 discloses a method of surface-treating structure components of a nuclear power plant, said method comprising wetting the surfaces of the structural components of the nuclear power plant to be exposed to reactor water with an electroless plating solution containing at least either an electrical insulating substance or an oxide having a lattice oxygen anion diffusing property for reducing electrochemical corrosion potential.

JP 2003-139891 A relates to a formation method for a photocatalyst film of a reactor structure material.

### [DISCLOSURE OF INVENTION]

When an oxide film or a ferrite film is formed on the surface of the metallic material forming structural members of a nuclear power generation plant as in Patent documents 1-3, it is possible to suppress the take-in quantity of the radioactive substance accompanying the initial corrosion of the metallic material, but the take-in itself is not necessarily suppressed so that a radioactive substance is increased with time.

In Patent document 4, titanium oxide is used as a catalytic substance. However, Patent document 4 reduces corrosion potential by a pn junction of the oxide film and the catalytic substance, thereby realizing the suppression of a stress corrosion cracking development, and it does not aim at suppressing the adhesion of a radioactive substance.

In view of the above-mentioned circumstances, an object of the present invention is to provide a method for suppressing radioactive substance, by which adhesion of radioactive substance onto the surface of the metallic materials forming structural members of a nuclear plant can be suppressed.

The method of suppressing adhesion of radioactive substance according to the present invention, comprises: removing an oxide film formed on a surface of a metallic material forming a structural member of a nuclear plant by a chemical decontamination treatment, then disposing titanium oxide as a substance for suppressing adhesion of radioactive substance directly on the surface of a metallic material forming a structural member of a nuclear plant by spraying a suspension liquid of the titanium oxide on the surface of the metallic material, and then holding the titanium oxide at 80 °C or higher.

According to the present invention, the incorporation or take-in of the radioactive substance to the inside of the oxide film formed on the surface of the above-mentioned metallic material is inhibited with the titanium oxide inhibiting adhesion of radioactive substance disposed on the surface of the metallic material forming the structural member of a nuclear plant, whereby adhesion of the radioactive substance to the surface of the metallic material can be suppressed.

### [BRIEF DESCRIPTION OF THE DRAWINGS]

Fig. 1 is a flow diagram showing a primary cooling water system for a boiling water reactor, to which the radioactive substance-adhesion suppression method according to the invention can be applied.
Fig. 2 is a sectional view showing a portion of a pipe which is a structural member in a nuclear power generation plant as shown in Fig. 1.
Fig. 3 is a graph showing test results about adhesion of radioactive substance to the pipe surface shown in Fig. 2 according to the first comparative example.
Fig. 4 is a sectional view showing a portion of a pipe for illustrating an embodiment of the radioactive substance-adhesion suppression method of the present invention
Fig. 5 is a graph showing test results about adhesion of radioactive substance to the pipe surface shown in Fig. 4.

### [BEST MODE FOR PRACTICING THE INVENTION]

Hereafter, best modes for practicing the present invention and three comparative examples are described with reference to drawings. However, the present invention is not limited to these embodiments

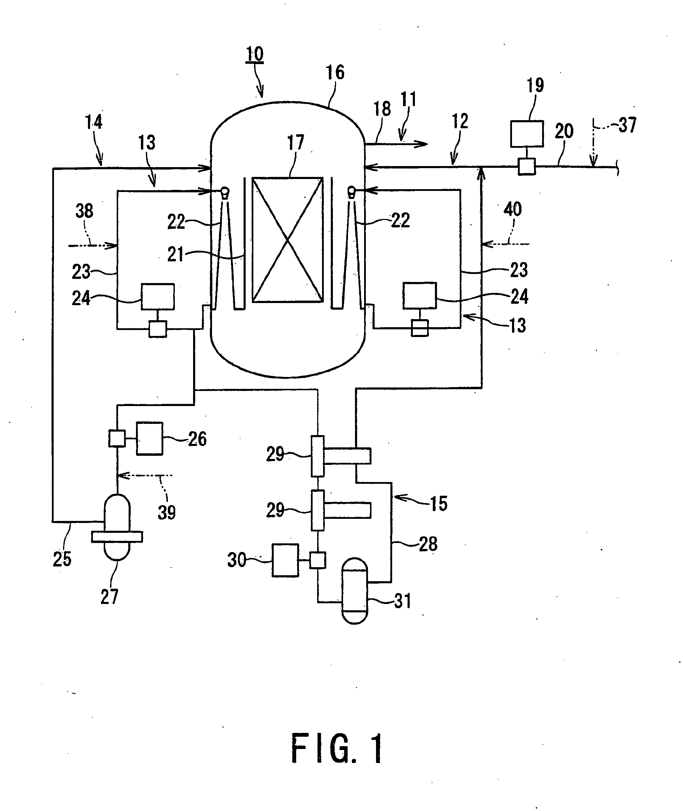

### [A] First comparative example (Fig. 1 - Fig. 3)

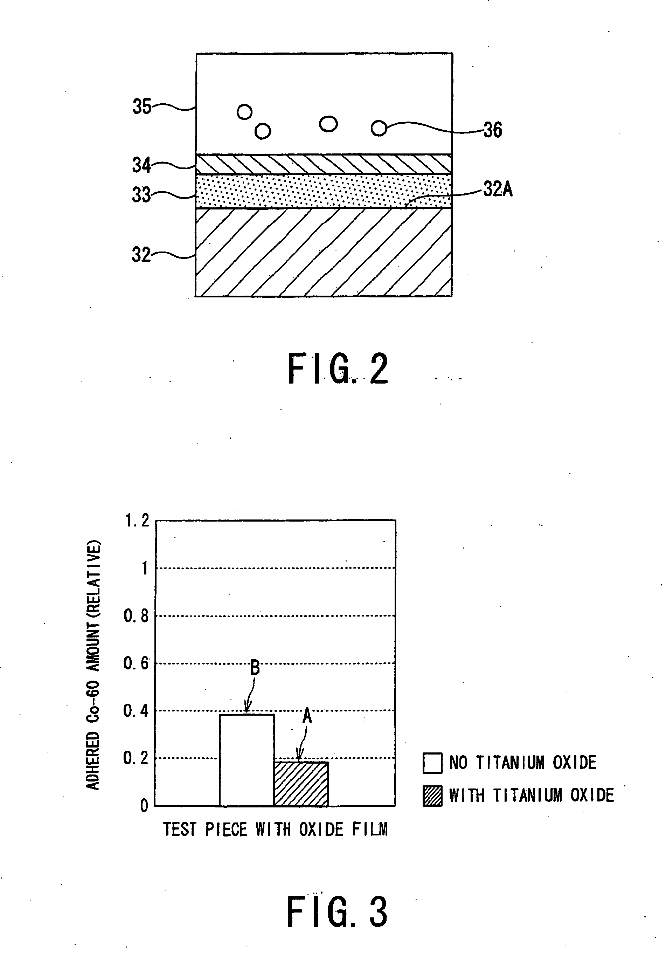

Fig. 1 is a flow diagram showing a primary cooling water system for a boiling water reactor, to which a first comparative example of a radioactive substance-adhesion suppression method is applied. Fig. 2 is a sectional view showing a portion of a pipe which is a structural member in a nuclear power generation plant as shown in Fig. 1.

A boiling water reactor 10 in a nuclear power generation plant is provided with a primary cooling water system including a main steam system 11, a recycled water supply system 12, a nuclear reactor recirculation system 13, a residual heat removal system 14, and a nuclear reactor coolant purification system 15, etc.

More specifically, the boiling water reactor 10 includes a reactor pressure vessel 16 and a core 17 accommodated in the vessel 16. The main steam system 11 supplies steam generated in the reactor pressure vessel 16 through the main steam system pipe 18 to a steam turbine (not shown). In the recycled water supply system 12, steam having worked after being sent to the steam turbine is condensed by a condenser (not shown) to form a recycled water, which is then recycled to the reactor pressure vessel 16 through a recycled water supply system pipe 20 equipped with a feed pump 19 and a feed water heater (not shown).

The nuclear reactor recirculation system 13 forcibly sends cooling water (coolant) into the reactor core 17. More specifically, the nuclear reactor recirculation system 13 includes a plurality of jet pumps 22 disposed in a downcomer part between a reactor core shroud 21 disposed so as to surround the reactor core 17 and the reactor pressure vessel 16, and recycle system pumps 24 disposed in re-circulation system piping 23 for elevating the pressure of the cooling water withdrawn out of the reactor pressure vessel 16. In the nuclear reactor recirculation system 13, the cooling water, of which the pressure was elevated by the re-circulation system pumps 24, is led to the jet pumps 22 which suck the cooling water therearound and forcibly send the cooling water into the lower part of the reactor core 17.

The residual heat removal system 14 includes residual heat removal system piping 25 connected to a position upstream of the re-circulation system pump 24 in the re-circulation system piping 23, and a residual heat removal system pump 26 and a heat exchanger 27 disposed in the residual heat removal system piping 25. In the residual heat removal system 14, the cooling water led to the residual heat removal system piping 25 from the nuclear reactor recirculation system 13 is cooled by the heat exchanger 27 and led to the reactor pressure vessel 16.

The nuclear reactor coolant purification system 15 includes coolant purification system piping 28 connected to a position upstream of the residual heat removal system pump 26, and a heat exchanger 29, a coolant purification system pump 30 and a filtration demineralizer 31 disposed in the coolant purification system piping 28. In the nuclear reactor coolant purification system 15, the cooling water (coolant) led to the coolant purification system piping 28 from the nuclear reactor recirculation system 13 is cooled by the heat exchanger 29 and led to and purified by the filtration demineralizer 31, and the purified cooling water is led to the recycled water supply system piping 20.

Now, the structural members in the nuclear power generation plant including, e.g., the reactor pressure vessel 16; intra-reactor structure, such as the reactor core shroud 21 and the jet pump 22; intra-reactor instruments (such as a gas-water separator and steam drier); and the instruments, such as pumps, and piping in the primary cooling water system (including the main steam system 11, the recycled water supply system 12, the nuclear reactor recirculation system 13, the residual heat removal system 14, and the nuclear reactor coolant purification system 15), are exposed to hot cooling water containing radioactive substance, so that oxide films having taken radioactive substance therein are formed on the surfaces of metallic materials forming the structural members. According to this comparative example, the incorporation or take-in of radioactive substance into this oxide film is inhibited to suppress adhesion of the radioactive substance onto the surfaces of the above-mentioned metallic materials.

For example, a pipe 32 shown in Fig. 2 is a structural member (forming a part of piping in the primary cooling water system) in a nuclear power generation plant, and primary cooling water (simply called "cooling water" hereafter) of the boiling water reactor 10 flows through inside thereof. The pipe 32 is composed of a metallic material, such as stainless steel, and an oxide film 33 is formed on the surface (inner surface) of the pipe 32.

Onto the oxide film 33, a solution or a suspension (a suspension in a particular example) of an adhesion-suppressing substance 34 capable of inhibiting adhesion of radioactive substance 36 (mentioned later) is sprayed so as to adhere onto the surface of the oxide film 33, thereby forming a layer of the adhesion-suppressing substance 34. The adhesion-suppressing substance 34 is a substance containing titanium oxide as a titanium compound. The adhesion-suppressing substance 34 is preferably formed in a layer on the entire surface of the oxide film 33 but can be formed discretely on the surface of the oxide film 33.

Then, a portion having the adhesion-suppressing substance 34 is held at 80 °C or higher within air, steam or water to enhance the tightness of the adhesion-suppressing substance 34, especially titanium oxide, and also enhance the adhesion of the adhesion-suppressing substance 34 onto the oxide film 33.

After being provided with the adhesion-suppressing substance 34, the pipe 32 is use in operation. The pipe 32 as a structural member in a nuclear power generation plant contacts primary cooling water in the nuclear reactor via the oxide film 33 and the adhesion-suppressing substance 34 or via at least the adhesion-suppressing substance 34. In this state, the pipe 32 contacts hot cooling water (nuclear reactor cooling water) 35, whereby the oxide film 33 grows and corrosion of the pipe 32 advances. The cooling water 35 contains radioactive substance 36, such as cobalt 60. In case where the oxide film 33 formed on the surface 32A of the pipe 32 is not provided with the adhesion-suppressing substance 34, radioactive substance 36 is taken into the oxide film 33 along with advance of the corrosion of the pipe 32. However, the take-in of the radioactive substance 36 to the oxide film 33 is inhibited by the formation of the adhesion-suppressing substance 34 in a tight layer as mentioned above regardless of advance of the corrosion of the pipe 32.

Now, a test result of having evaluated the effect of titanium oxide for suppressing adhesion of the cobalt 60 is shown in Fig. 3. Fig. 3 shows the results of a test wherein test pieces of SUS316L were immersed in water at 280 °C to form an oxide film thereon, and then immersed in water at 280 °C containing cobalt 60 for 500 hours. As shown in Fig. 3, the amount of adhered radioactive substance (cobalt 60) on a test piece coated with a titanium oxide (denoted by A in Fig. 3) could be reduced to about a half of the amount on a test piece with no titanium oxide (denoted by B in Fig. 3).

As described above, according to this comparative example, the take-in of radioactive substance 36 (e.g. cobalt 60) to an oxide film 33 is inhibited by the adhesion-suppressing substance 34 containing titanium oxide disposed via an oxide film 33 on the surface 32A of a pipe 32 which is a structural member of a nuclear power generation plant. As a result, adhesion of radioactive substance onto the surface 32A of the pipe 32 can be suppressed.

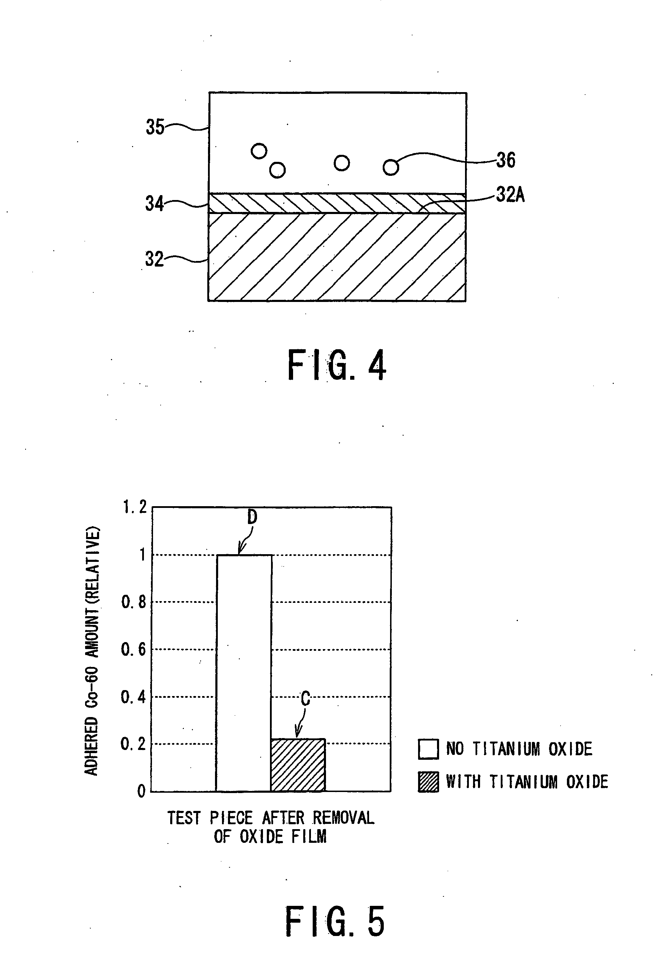

### [B] First embodiment (Fig. 4, Fig. 5)

Fig. 4 is a sectional view showing a portion of a pipe for illustrating an embodiment of the radioactive substance-adhesion suppression method of the present invention. In this embodiment, parts identical to those in the first comparative example are denoted by identical numerals and explanation thereof is simplified or omitted.

This inventive embodiment differs from the above first comparative example in that an oxide film 33 formed on the surface 32A of a pipe 32 is removed by a chemical decontamination treatment before spraying the suspension of titanium oxide as an adhesion-suppressing substance 34.

Thus, in this embodiment, the oxide film 33 formed in the surface 32A of the pipe 32 is first removed by a chemical decontamination treatment. The chemical decontamination treatment is a treatment including at least one time of reductive dissolution or oxidative dissolution with a chemical, or at least one time of alternation of the above-mentioned reductive dissolution and oxidative dissolution.

Then, titanium oxide as the adhesion-suppressing substance 34 is deposited on the surface 32A of the pipe 32 from which the oxide film 33 has been removed by the above-mentioned chemical decontamination treatment. Also in the case, titanium oxide as the adhesion-suppressing substance 34 may be formed over the entire surface 32A of the pipe 32, or discretely on the surface 32A by spraying a suspension of titanium oxide as the adhesion-suppressing substance 34.

Then, a portion having titanium oxide as the adhesion-suppressing substance 34 is held at 80 °C or higher within air, steam or water to enhance the tightness of titanium oxide as the adhesion-suppressing substance 34, and also the adhesion of titanium oxide as the adhesion-suppressing substance 34 onto the surface 32A of the pipe 32.

After being provided with titanium oxide as the adhesion-suppressing substance 34, the pipe 32 is used in operation, and contacts hot cooling water 35 to be corroded, whereby an oxide film 33 is formed between titanium oxide as the adhesion-suppressing substance 34 and the surface 32A of the pipe 32. Also in this case, however, the take-in of the radioactive substance 36 to the oxide film 33 formed on the surface 32A of the pipe 32 is suppressed by the formation of titanium oxide as the adhesion-suppressing substance 34 compared with a case where the adhesion-suppressing substance 34 is absent.

Now, a test result of having evaluated the effect of titanium oxide for suppressing adhesion of the cobalt 60 is shown in Fig. 5. Fig. 5 shows the results of a test wherein test pieces of SUS316L were immersed in water at 280 °C to form an oxide film thereon, subjected to removal of the oxide film by chemical decontamination and then immersed in water at 280 °C containing cobalt 60 for 500 hours. As shown in Fig. 5, the amount of adhered cobalt 60 onto a test piece having removed the oxide film (denoted by D in Fig. 5) was increased to two times or more compared with the case of retaining the oxide film (denoted by B in Fig. 3). However, even in the case of having removed the oxide film, the amount of adhered cobalt 60 on a test piece provided with titanium oxide (denoted by C in Fig. 3) could be reduced to about 1/5 of the amount on a test piece with no titanium oxide (denoted by D in Fig. 5).

As described above, according to this embodiment, the take-in of radioactive substance 36 (e.g. cobalt 60) to an oxide film 33 is inhibited by titanium oxide as the adhesion-suppressing substance 34 disposed via an oxide film 33 on the surface 32A of a pipe 32 which is a structural member of a nuclear power generation plant. As a result, adhesion of radioactive substance 36 onto the surface 32A of the pipe 32 can be suppressed.

Incidentally, this embodiment has been described with respect to the case where the oxide film 33 is removed from the surface 32A of the pipe 32, a similar effect is expectable even if this embodiment is applied to a pipe having no oxide film from the outset, like a fresh pipe.

### [C] Second comparative example (Fig. 4)

The second comparative example differs from the first comparative example and the first embodiment described above in that the radioactive substance adhesion-suppression method is performed at the time of inspection of a nuclear reactor, for example, at the time of the periodical inspection of the boiling water reactor 10. Also in this comparative example, parts identical to those in the first comparative example and the first embodiment are denoted by identical numerals and explanation thereof is simplified or omitted.

Thus, in this comparative example, at the time ofthe periodical inspection of the boiling water reactor 10, decontamination treatment, such as a chemical decontamination treatment, is applied to the pipe 32 which is a structural member as described above in a nuclear power generation plant, and the oxide film 33 is removed from the surface 32A of the piping 32.

Then, the pipe 32 from which the oxide film 33 has been removed is filled with cooling water 35, into which a suspension of the adhesion-suppressing substance 34 containing titanium oxide is injected. As a result, the adhesion-suppressing substance 34 containing titanium oxide is deposited and formed on the surface 32A of the pipe 32.

Then, the temperature of the cooling water 35 in the pipe 32 is held at 80 °C - 100 °C to enhance the tightness of the adhesion-suppressing substance 34, especially titanium oxide, and also enhance the adhesion of the adhesion-suppressing substance 34 (particularly titanium oxide) onto the oxide film 33.

Also in this embodiment, similarly as in the above second embodiment, the adhesion-suppressing substance 34 containing titanium oxide is formed on the surface 32A of the pipe 32 which is an example of the structural member in a nuclear power generation plant, and owing to the adhesion-suppressing substance 34, even if the pipe 32 is used in operation, the take-in of radioactive substance 36 (e.g., cobalt 60) to the oxide film 33 formed on the surface 32A of the pipe 32 can be inhibited. As a result, it becomes possible to suppress the adhesion of the radioactive substance 36 to the surfaces of the metallic materials of the above-mentioned structural members, such as the surface 32A of the pipe 32, exposed to primary cooling water or steam thereof in the boiling water reactor 10.

### [D] Third comparative example (Fig. 1)

The third comparative example differs from the first to second comparative example and the first embodiment described above in that the method for suppressing adhesion of radioactive substance is operated during the time of start-up, stopping or operation of a nuclear reactor. Also in this comparative example, parts identical to those in the first comparative example and the first embodiment are denoted by identical numerals and explanation thereof is simplified or omitted.

Thus, in this comparative example, the apparatus system of Fig. 1 is provided with a 1st injection point 37 upstream of the feed pump 19 in the recycled water supply system piping 20, a 2nd injection point 38 downstream of the re-circulation-system-pump 24 in the re-circulation system piping 23, a 3rd injection point 39 downstream of the residual-heat-removal-system-pump 26 in the residual heat removal system piping 25, and a 4th injection point 40 downstream of the coolant purification system pump 30 and the filtration demineralizer 31 in the coolant purification system piping 28, respectively, as denoted by two point-and-dash lines. A suspension of the adhesion-suppressing substance 34 containing titanium oxide is injected from at least one of the 1st injection point 37, the 2nd injection point 38, the 3rd injection point 39 and the 4th injection point 40 described above by means of an injection pump (not shown), etc. during the time of start-up, stopping or operation of the nuclear reactor 10.

The injected adhesion-suppressing substance 34 is injected into the cooling water of the primary cooling water system (the recycled water supply system 12, the nuclear reactor recirculation system 13, the residual heat removal system 14, or the nuclear reactor coolant purification system 15) in which a selected one of the injection points 37-40 exists, to reach all the primary cooling water systems including the boiling water reactor 10 along with the cooling water, and is caused to adhere and disposed on the surface 32A of those structural members, such as pipe 32, directly or via the oxide film 33. In the primary cooling water system, the temperature of cooling water is controlled at 100 °C - 200 °C , so that the tightness of the adhesion-suppressing substance 34 disposed on the surface 32A of the pipe 32 directly or via the oxide film 33 is improved, and the adhesion to the surface 32A or the oxide film 33 of the pipe 32 is improved.

The adhesion-suppressing substance 34 is directly formed on the surface 32A of the pipe 32, in the case where the pipe 32 is a fresh pipe or the oxide film 33 has been removed by decontamination from the surface 32A of the pipe 32.

Also in this comparative example, similarly as in the above first comparative example and the first embodiment, the adhesion-suppressing substance 34 containing titanium oxide is formed on the surface 32A of the pipe 32 which is an example of the structural member in a nuclear power generation plant, and owing to the adhesion-suppressing substance 34, the take-in of radioactive substance 36 (e.g., cobalt 60) to the oxide film 33 formed on the surface 32A of the pipe 32 can be inhibited. As a result, it becomes possible to suppress the adhesion of the radioactive substance 36 to the surfaces of the metallic materials of the above-mentioned structural members, such as the surface 32A ofthe pipe 32.

Incidentally, while an example of application to the boiling water reactor (BWR) equipped with an external recycle system outside an nuclear reactor has been described above in the embodimentof the present invention, the present invention can also be applied to the improved type boiling water reactor (ABWR) equipped with an internal recycle system inside the reactor, and can also be applied to the pressurized water reactor (PWR) with a light water reactor. In a pressurized water reactor, the reactor pressure vessel is replaced by a reactor vessel, and an intra-reactor structure, a core vessel, a control rod cluster, etc., are disposed in the reactor vessel.

## Claims

1. A method of suppressing adhesion of radioactive substance (36), comprising:
removing an oxide film (33) formed on a surface (32A) of a metallic material forming a structural member of a nuclear plant by a chemical decontamination treatment,
then disposing titanium oxide as a substance (34) for suppressing adhesion of radioactive substance (36) directly on the surface (32A) of a metallic material forming a structural member of a nuclear plant by spraying a suspension liquid of the titanium oxide on the surface (32A) of the metallic material, and
then holding the titanium oxide at 80 °C or higher.

2. The radioactive substance-adhesion suppression method according to Claim 1, wherein the oxide film (33) is chemically removed by reductive dissolution or oxidative dissolution, or by alternation of reductive dissolution and oxidative dissolution.

## Patentansprüche

1. Verfahren zum Unterdrücken des Anhaftens einer radioaktiven Substanz (36), umfassend:
Entfernen eines Oxidfilms (33), der auf einer Oberfläche (32A) eines metallischen Materials ausgebildet ist, das ein Strukturbauteil eines Kernkraftwerks bildet, durch eine chemische Dekontaminationsbehandlung,
dann Aufbringen von Titanoxid als eine Substanz (34) zum Unterdrücken des Anhaftens einer radioaktiven Substanz (36) direkt auf die Oberfäche (32A) eines metallischen Materials, das ein Strukturbauteil eines Kernkraftwerks bildet, durch Sprühen einer Suspensionsflüssigkeit des Titanoxids auf die Oberfläche (32A) des metallischen Materials und
dann Halten des Titanoxids bei 80 °C oder höher.

2. Verfahren zum Unterdrücken des Anhaftens einer radioaktiven Substanz nach Anspruch 1, bei dem der Oxidfilm (33) durch reduzierendes Auflösen oder oxidierendes Auflösen oder durch abwechselndes reduzierendes Auflösen und oxidierendes Auflösen chemisch entfernt wird.

## Revendications

1. Procédé de suppression d'adhésion d'une substance radioactive (36) comprenant :
un enlèvement d'un film d'oxyde (33) formé sur une surface (32A) d'un matériau métallique formant un élément structurel d'une usine nucléaire par un traitement chimique de décontamination,
ensuite une application d'un oxyde de titanium comme une substance (34) pour supprimer l'adhésion d'une substance radioactive (36) directement sur la surface (32A) d'un matériau métallique formant un élément structurel d'une usine nucléaire par pulvérisation d'une suspension liquide de l'oxyde de titanium sur la surface (32A) du matériau métallique, et
ensuite un maintien de l'oxyde de titanium à 80°C ou plus.

2. Méthode de suppression d'adhésion d'une substance radioactive selon la revendication 1, dans laquelle le film d'oxyde (33) est enlevé chimiquement par dissolution réductrice ou dissolution oxidatrice, ou par une alternance de dissolution réductrice et de dissolution oxidatrice.
